# EUROPÄISCHE PATENTSCHRIFT

(11) **EP 3 497 042 B1**
(45) Veröffentlichungstag und Bekanntmachung des Hinweises auf die Patenterteilung: **14.10.2020**
(21) Anmeldenummer: 17749186.7
(22) Anmeldetag: 07.08.2017
(51) Int. Cl.: B65G 23/08

(54) **ELEKTRISCHE STECKVERBINDUNG FÜR MOTORROLLEN**
ELECTRICAL PLUG CONNECTOR FOR MOTORIZED ROLLERS
CONNEXION ÉLECTRIQUE À ENFICHAGE POUR ROULEAUX MOTORISÉS

(30) Priorität: 08.08.2016 DE 102016114672
(43) Veröffentlichungstag der Anmeldung: 19.06.2019
(73) Patentinhaber: Interroll Holding AG, 6592 Sant' Antonino (CH)
(72) Erfinder: VAN HOLTHE TOT ECHTEN, Jurriaen, 6592 San't Antonino (CH)
(74) Vertreter: Eisenführ Speiser
(86) Internationale Anmeldenummer: PCT/EP2017/069902
(87) Internationale Veröffentlichungsnummer: WO 2018/029134

(56) Entgegenhaltungen:
- DE-U- 1 978 258
- DE-U1-202008 017 534
- US-A1- 2007 197 072

## Beschreibung

Die Erfindung betrifft eine motorgetriebene Förderrolle, umfassend einen Rollenkörper, der sich entlang einer Längsachse erstreckt, ein Achselement, eine Lagereinheit zur drehbaren Lagerung des Rollenkörpers in Bezug auf das Achselement, einen innerhalb des Rollenkörpers angeordneten Antriebsmotor, der mit dem Achselement und dem Rollenkörper zur Erzeugung eines Drehmoments zwischen dem Achselement und dem Rollenkörper mechanisch gekoppelt ist, eine elektrische Steckverbindung, die in einem Hohlraum in dem Achselement angeordnet ist und die einen Stecker und eine Buchse umfasst, die lösbar miteinander gekoppelt werden können, um eine ein- bis mehrpolige elektrische Steckverbindung herzustellen und eine elektrische Verbindungsleitung zwischen der elektrischen Steckverbindung und dem Antriebsmotor.

Motorgetriebene Förderrollen der eingangs genannten Art werden in zahlreichen Anwendungen eingesetzt, um Gegenstände wie Behälter, Paletten, Pakete, Gepäckstücke und dergleichen zu befördern. Dabei kommen solche Förderrollen als Rollenantriebe zum Einsatz, bei denen die Förderstrecke durch mehrere aneinander gereihte Förderrollen gebildet wird, von denen einige motorbetrieben sind, andere als Leerlaufrollen ausgebildet sind oder durch Riemenantriebe oder dergleichen von motorbetriebenen Förderrollen angetrieben werden. Motorbetriebe Förderrollen kommen weiterhin als sogenannte Trommelmotoren zum Einsatz, um beispielsweise Förderbänder anzutreiben und werden zu diesem Zweck beispielsweise einseitig als Umlenkrolle verbaut.

Regelmäßig weisen solche motorbetriebenen Förderrollen einen innerhalb des Rollenkörpers angeordneten Antriebsmotor auf, der elektrisch betrieben ist und der ein Drehmoment zwischen einem Achselement und einem Rollenkörper erzeugt. Typischerweise wird das Achselement drehmomentfest in einem Rahmengestell befestigt und der Rollenkörper durch das Drehmoment in Rotation relativ zum Achselement versetzt. Die Energiezufuhr zu dem Antriebsmotor erfolgt hierbei durch eine elektrische Verbindung, die durch das Achselement hindurchgeführt wird. Zu diesem Zweck ist das Achselement als Hohlachse ausgebildet, sodass eine Kabelleitung von außerhalb durch das Achselement hindurch verlegt und mit dem Antriebsmotor verbunden werden kann.

Es ist bekannt, zum Zwecke der leichten Austauschbarkeit einer motorbetriebenen Förderrolle diese elektrische Energieversorgung solcher Art auszuführen, dass eine mit einfachen Mitteln erreichbare Trennbarkeit vorhanden ist. Hierdurch kann einerseits dann, wenn die motorbetriebene Förderrolle defekt ist, der Austausch der Förderrolle ohne größeren Aufwand in Bezug auf die elektrische Verbindung durchgeführt werden, indem die elektrische Energieversorgung getrennt wird und nachfolgend, nach Ausbau der defekten Förderrolle und Einbau einer intakten Förderrolle, diese wieder entsprechend angeschlossen wird. Zum anderen kann bei Beschädigung der elektrischen Energieversorgung, beispielsweise wenn versehentlich ein Kabel beschädigt oder durchtrennt wird, dieses Kabel in einfacher Weise ausgetauscht werden, ohne dass hierfür der Ausbau der Förderrolle notwendig ist.

Aus US 2007/0197072 A1 ist eine motorbetriebene Förderrolle, bei der in einem Hohlraum in einem Achselement eine elektrische Steckverbindung angeordnet ist, vorbekannt. Außerdem ist aus EP 2 161 223 eine solche lösbare elektrische Steckverbindung vorbekannt, bei der ein Stecker in eine Buchse eingesetzt wird, die in dem Hohlraum des Achselementes angeordnet ist. Der Stecker wird zur Sicherung hierbei mittels entweder einer am Stecker axial festgesetzten Überwurfhülse mit dem Achselement verschraubt oder mittels einer am Stecker ausgebildeten rastenden Stiftverbindung an dem Achselement gesichert. Zwar wird durch diese Ausführung der elektrischen Steckverbindung eine einfache und eine schnelle Lösbarkeit erreicht, jedoch hat sich zum einen gezeigt, dass eine solche Lösbarkeit in der solcher Art ausgeführten Bauweise Nachteile aufweist. Zum einen kann die Steckverbindung in einfacher Weise gelöst werden, was zu fehlerhaften Installationsvorgängen aufgrund Tätigkeit von unbefugtem und nicht ausreichend ausgebildetem Personal führen kann. Zum anderen wird durch die schraub- oder stiftgesicherte Verbindung der Zutritt von Flüssigkeit aus der Umgebung in den Innenraum des Rollenkörpers und in den Bereich der elektrischen Steckverbindung selbst ermöglicht. Dies macht es unmöglich, eine solcher Art ausgebildete Förderrolle in Bereichen einzusetzen, die Feuchtigkeit und insbesondere Spritzwasser ausgesetzt sind, wie beispielsweise in Bereichen der Lebensmittel-verarbeitenden Industrie, in denen eine häufige Reinigung der Förderstrecke notwendig ist.

Es ist bekannt, für solche Einsatzzwecke und zur Verhinderung eines Montagefehlers eine elektrische Anschlussverbindung mittels einer abgedichteten Montagebox auszuführen, die unmittelbar an der motorbetrieben Förderrolle oder am Rahmengestell benachbart zu der motorbetrieben Förderrolle installiert ist. Hierbei kann auf abgedichtete Boxen zurückgegriffen werden und eine insoweit gegen Spritzwasser geschützte Ausführung erreicht werden. Nachteilig ist jedoch, dass hierdurch zusätzlicher Montageaufwand und Platzbedarf entsteht, um diese Spritzwasser-abgedichtete Montageweise zu realisieren. In Bereichen der Förderstrecken von Lebensmittel-verarbeitenden Anlagen wird daher häufig noch auf untrennbare elektrische Versorgungsleitungen zurückgegriffen, um motorbetriebe Förderrollen mit Energie zu versorgen und/oder Signale bzw. Daten von Sensoren wie beispielsweise Encoder oder Thermoschutzschaltern nach außen zu führen, mit den zuvor beschriebenen Nachteilen bei der Notwendigkeit des Austausch der Förderrolle oder des Leitungskabels aufgrund Beschädigung.

Der Erfindung liegt die Aufgabe zugrunde, eine motorbetriebe Förderrolle bereit zu stellen, welche in Bereichen, die Spritzwasser ausgesetzt sind, eine besser geeignete elektrische Energieversorgung aufweist und hierbei hinsichtlich der Montage gegenüber dem Stand der Technik verbesserte Eigenschaften aufweist.

Diese Aufgabe wird erfindungsgemäß gelöst durch eine motorbetriebene Förderrolle nach Anspruch 1.

Die erfindungsgemäße Förderrolle vereint eine montagefreundliche elektrische Energieversorgung oder Sensorverbindung mit einer zuverlässigen Abdichtung gegenüber Spritzwasser. Hierzu wird in vorteilhafter Weise auf ein Bauelement in Form einer Kabeldurchführung zurückgegriffen. Kabeldurchführungen sind bekannt für den Einsatz in Anwendungen, bei denen ein Kabel durch eine Öffnung hindurchgeführt werden muss und hierbei eine Zugentlastung und ein Scheuerschutz angestrebt wird. Kabeldurchführungen können für diesen Einsatzzweck in unterschiedlichen Bauweisen zum Einsatz kommen, beispielsweise als einzuklippende Kabeldurchführungen, die durch Verrastungen in der Öffnung verankert werden können und ebenso durch Verrastungen das durch die Kabelverschraubung hindurchgeführte Kabel zugentlasten und abdichten. Neben solchen verrastbaren Kabeldurchführungen sind auch schraubbare Kabeldurchführungen bekannt, bei denen die Kabeldurchführung mittels einer Schraubverbindung in der Gehäuseöffnung verankert wird, beispielsweise mittels eines durch die Öffnung hindurch gesteckten Außengewindes und einer Gegenmutter und auch die Fixierung und Abdichtung der Kabelleitung durch Verschraubung einer Klemmhülse auf einer Kabelverschraubungshülse erfolgt. Ebenso sind daraus kombinierte Ausgestaltungen von Kabeldurchführungen bekannt.

Erfindungsgemäß wird eine solche Kabeldurchführung eingesetzt, um die elektrische Steckverbindung zwischen dem Stecker und der Buchse innerhalb des Hohlraums des Achselementes einerseits abzudichten, andererseits gegen unerwünschte Lockerungen zu sichern. Dies wird erfindungsgemäß erreicht, indem zum einen die elektrische Steckverbindung unabhängig von der Abdichtung und mechanischen Sicherung ausgebildet ist und durch einen Stecker und eine Buchse innerhalb des Achselements ausgeführt wird. Zum anderen wird eine Kabelverschraubung bereit gestellt, die nach Herstellung der elektrischen Steckverbindung mittels Stecker und Buchse eine Abdichtung und Sicherung unabhängig hiervon bewirkt, indem die Kabeldurchführung mit dem Achselement einerseits abgedichtet verbunden wird und mit der Kabelleitung andererseits eine abgedichtete und mechanisch fixierte Verbindung herstellt. Hierdurch wird zum einen eine zuverlässige Abdichtung des Innenraums des Trommelmotors gegen Eintritt von Feuchtigkeit und Spritzwasser über die elektrische Steckverbindung erreicht. Zum anderen kann durch die Befestigung der Kabeldurchführung am Achselement eine direkte Sicherung der Verbindung zwischen Stecker und Buchse erzielt werden. Eine Sicherung wird darüber hinaus auch durch die Fixierung der Kabelleitung in der Kabeldurchführung aufgrund der Steifigkeit der Kabelleitung selbst bewirkt.

Gemäß einer ersten bevorzugten Ausführungsform ist vorgesehen, dass der Klemmabschnitt einen Dichtungsabschnitt umfasst, der das Leitungskabel in der Betriebsposition abgedichtet in dem Klemmabschnitt fixiert. Gemäß dieser Ausführungsform wird eine Dichtungsfunktion durch einen Dichtungsabschnitt bewirkt, der Teil des Klemmabschnitts ist. Ein solcher Dichtungsabschnitt kann beispielsweise durch eine ringförmige oder zylindrische Dichtung ausgeführt sein, die dichtend zwischen der Kabeldurchführung und dem Außenmantel des Leitungskabels angeordnet und dort gequetscht ist. Der Dichtungsabschnitt kann hierbei zugleich die mechanische Fixierung der Kabeldurchführung bewirken. Insbesondere kann der Dichtungsabschnitt durch ein gummielastisches Material ausgeführt sein, beispielsweise einen Polyurethan-Schlauch oder einen Silikon-Schlauch.

Gemäß einer weiteren bevorzugten Ausführungsform ist vorgesehen, dass der Befestigungsabschnitt an der Kabeldurchführungshülse ausgebildet ist. Gemäß dieser Ausführungsform ist die Kabeldurchführungshülse an dem Achselement befestigt, beispielsweise indem die Kabeldurchführungshülse mittels eines daran ausgebildeten Außengewindes in ein Innengewinde des Achselementes eingeschraubt ist. Das Innengewinde kann in der Wandung des Hohlraums, in dem die Stecker-Buchse Verbindung platziert ist, ausgeformt sein. Alternativ kann die Kabeldurchführungshülse mittels eines daran ausgebildeten Innengewindes auf ein Außengewinde des Achselementes aufgeschraubt sein oder an dem Achselement mittels einer Rastverbindung oder einer kraftschlüssigen Pressverbindung befestigt sein.

Gemäß einer weiteren bevorzugten Ausführungsform ist vorgesehen, dass der Klemmabschnitt an der Kabeldurchführungshülse ausgebildet ist. Gemäß dieser Ausführungsform ist der Klemmabschnitt an der Kabeldurchführungshülse integral oder als gesondertes Bauelement angeordnet, wodurch die mechanische Fixierung und gegebenenfalls die Abdichtung der Kabelleitung an der Kabeldurchführungshülse ausgebildet ist. Diese Ausführungsform kann insbesondere kombiniert sein mit der voranstehend erläuterten Ausführungsform, bei der auch der Befestigungsabschnitt an der Kabeldurchführungshülse angeordnet ist, wodurch eine direkte Kraftübertragung von dem Achselement über die Kabeldurchführungshülse auf die Kabelleitung erfolgt. Grundsätzlich ist zu verstehen, dass diese Ausgestaltung bevorzugt ist, alternativ jedoch andere Ausgestaltungen, bei denen der Befestigungsabschnitt und/oder der Klemmabschnitt an der Klemmhülse ausgebildet sind, ebenso für andere Anwendungen vorteilhaft sein können.

Es ist weiterhin bevorzugt, dass das Achselement einen ersten Achsabschnitt, der von dem Rollenkörper oder einer an dem Rollenkörper befestigten Endkappe umgeben ist und einen zweiten Achsabschnitt, der aus dem Rollenkörper bzw. der Endkappe hervorsteht zur Befestigung des Achselements an einem Förderrollengestell, aufweist, wobei die Lagereinheit an dem ersten Achsabschnitt befestigt ist und der Befestigungsabschnitt der Kabeldurchführung an dem zweiten Achsabschnitt befestigt ist. Gemäß dieser Ausführungsform ist das Achselement teilweise innerhalb des Rollenkörpers oder einer damit verbundenen Endkappe und teilweise außerhalb des Rollenkörpers bzw. der Endkappe angeordnet, steht also seitlich hervor. Hierbei ist zu verstehen, dass diese Konfiguration dazu dient, dass die motorbetriebene Förderrolle mittels des Achselementes in einem seitlich angeordneten Rahmengestell befestigt werden kann und der Rollenkörper auf dem Achselement drehbar gelagert ist. Diese Ausgestaltung kann auch durch eine Endkappe bewirkt werden, die in den Rollenkörper eingesetzt ist und in der die Lagerungseinheit angeordnet ist. Eine solche Endkappe kann einerseits bündig oder im Wesentlichen bündig mit dem Ende des Rollenkörpers verlaufen, kann aber auch so ausgestaltet sein, dass die Endkappe sich in Längsrichtung über den Rollenkörper hinaus erstreckt und diesen folglich verlängert. In diesem Fall kann das Achselement solcher Art angeordnet sein, das es teilweise innerhalb der Endkappe angeordnet ist und hier auch die Lagerungseinheit für die drehbare Lagerung aufnimmt und sich das Achselement über die Endkappe hinaus nach außen erstreckt. Durch diese Ausgestaltung kann darüberhinaus in axialer Richtung eine gute Zugänglichkeit erzielt werden, um die elektrische Steckverbindung montieren zu können und die Sicherung und Abdichtung durch die Kabeldurchführung herzustellen.

Gemäß einer noch weiteren Ausführungsform ist vorgesehen, dass die Klemmhülse mit der Kabeldurchführungshülse mittels einer lösbaren Rastverbindung verbunden ist und aus der zweiten in die erste Position bewegbar ist, indem die Klemmhülse mit der Kabeldurchführungshülse verrastet wird. Gemäß dieser Ausführungsform werden die Klemmhülse und die Kabelhülse durch eine Rastverbindung miteinander verbunden, die lösbar ist. Dies kann beispielsweise durch elastisch federnde Rasthaken, die in einem Hinterschnitt eingreifen, ausgeführt sein, ebenso kann als Rastverbindung eine Bajonettverbindung vorgesehen sein, bei der ein Formschluss durch eine Folge einer translatorischen und einer rotatorischen Bewegung zwischen Klemmhülse und Kabeldurchführungshülse bewirkt wird. Bevorzugt kann die rastende Verbindung nicht mit einem Standardwerkzeug wie einem Schraubschlüssel gelöst werden, um unbefugte Montagevorgänge an der elektrischen Steckverbindung hierdurch zu verhindern. So kann beispielsweise ein Systemwerkzeug, welches separater Bestandteil der erfindungsgemäßen Förderrolle ist, in eine Öffnung der Kabeldurchführung eingeführt werden und hierdurch die Rastverbindung für eine Demontage lösen.

Gemäß einer bevorzugten, hierzu alternativen Ausführungsform ist vorgesehen, dass die Klemmhülse mit der Kabeldurchführungshülse mittels einer Gewindeverbindung verbunden ist und aus der zweiten in die erste Position bewegbar ist, indem die Klemmhülse auf die Kabeldurchführungshülse aufgeschraubt oder in die Kabeldurchführungshülse eingeschraubt wird. Gemäß dieser Ausführungsform wird die Verbindung zwischen Klemmhülse und Kabeldurchführungshülse durch eine Schraubverbindung bewirkt, beispielsweise indem an der Kabeldurchführungshülse ein Außengewinde ausgebildet ist, auf das ein entsprechendes Innengewinde der Klemmhülse aufgeschraubt werden kann. Bei dieser Ausführungsform kann die Klemmhülse beispielsweise als Mutter ausgeführt sein, die mittels eines Außensechskants aufgeschraubt und angezogen werden kann und die beispielsweise einen inneren, sich verjüngenden, beispielsweise konischen Umfangsabschnitt aufweist, der dazu dient, einen Klemmabschnitt an der Kabeldurchführungshülse beim Aufschrauben radial einwärts zu verformen, um hierdurch die Klemmwirkung und Dichtungswirkung auf das Leitungskabel auszuüben. Diese Ausführungsform ist insbesondere bevorzugt, wenn die Kabeldurchführungshülse auch mittels eines Gewindes auf den Achselementen befestigt ist. Grundsätzlich ist zu verstehen, dass die Gewindeverbindung zwischen Klemmhülse und Kabeldurchführungshülse auch mittels eines Außengewindes an der Klemmhülse ausgeführt sein kann, das in ein Innengewinde an der Kabeldurchführungshülse eingeschraubt wird. In diesem Fall kann beispielsweise der Klemmabschnitt an der Klemmhülse ausgebildet sein und die Klemmung bewirkt werden, indem eine sich verjüngende, beispielsweise konische Außenfläche der Klemmhülse durch die Verschraubung mit der Kabeldurchführungshülse eine radial einwärts gerichtete Pressung eines Klemmabschnitts bewirkt oder eine entsprechende konische Innenumfangsfläche an der Kabeldurchführungshülse einen Klemmabschnitt an der Klemmhülse nach radial einwärts verformt, wenn die Klemmhülse in die Kabeldurchführungshülse eingeschraubt wird.

Gemäß einer weiteren bevorzugten Ausführungsform ist vorgesehen, dass der Klemmabschnitt eine sich verjüngende, beispielsweise konische Umfangsfläche, eine Gegenumfangsfläche und ein elastisch verformbares Dichtungselement umfasst, das durch eine axiale Bewegung der Klemmhülse relativ zu der Kabeldurchführungshülse aus der ersten in die zweite Position radial einwärts verformt wird, indem die konische Umfangsfläche gegen die Gegenumfangsfläche gepresst wird. Gemäß dieser Ausführungsform wird die Klemm- und gegebenenfalls Dichtungswirkung der Kabeldurchführung bewirkt, indem zwei Flächen gegeneinander gepresst werden, wenn die Klemmhülse aus der ersten in die zweite Position in Bezug auf die Kabeldurchführungshülse bewegt wird. Dabei ist zu verstehen, dass die sich verjüngende, beispielsweise konische Umfangsfläche oder die Gegenumfangsfläche an der Klemmhülse ausgebildet sein kann und entsprechend die Gegenumfangsfläche oder die sich verjüngende, beispielsweise konische Umfangsfläche an der Kabeldurchführungshülse ausgebildet sein kann, wobei jeweils eine der beiden Umfangsflächen an einem der beiden Bauteile ausgebildet ist, um die Zusammenwirkung zu erreichen. Durch die Ausbildung einer sich verjüngenden, beispielsweise konischen Umfangsfläche kann eine axiale Bewegung zwischen Klemmhülse und Kabeldurchführungshülse in einer radial einwärts gerichteten Klemmkraft gewandelt und hierdurch die Kabelleitung im Klemmabschnitt geklemmt und gegebenenfalls abgedichtet werden.

Dabei ist es besonders bevorzugt, wenn die sich verjüngende Umfangsfläche als Innenumfangsfläche, insbesondere als Innenkonusfläche, an der Klemmhülse oder an der Kabeldurchführungshülse ausgebildet ist und die Gegenumfangsfläche entsprechend als Außenumfangsfläche an der Kabeldurchführungshülse oder an der Klemmhülse ausgebildet ist, oder die sich verjüngende Umfangsfläche als Außenumfangsfläche, insbesondere als Außenkonusfläche, an der Klemmhülse oder an der Kabeldurchführungshülse ausgebildet ist und die Gegenumfangsfläche entsprechend als Innenumfangsfläche an der Kabeldurchführungshülse oder an der Klemmhülse ausgebildet ist. Gemäß diesen beiden alternativen Ausbildungsformen wird eine fertigungstechnisch in hoher Qualität und effizient herstellbare Konstruktion des Klemmabschnitt an der Kabeldurchführung erreicht, mit der eine zuverlässige Abdichtung und Klemmung einer Kabelleitung in der Kabeldurchführung erzielt werden kann. Dabei ist zu verstehen, dass beide Varianten insbesondere mit einer Verbindungsweise zwischen Kabeldurchführungshülse und Klemmhülse kombiniert sein können, wie zuvor beschrieben, indem eine Rastwirkung oder eine Verschraubung zwischen Kabeldurchführungshülse und Klemmhülse bewirkt wird.

Gemäß einer weiteren bevorzugten Ausführungsform ist vorgesehen, dass der Klemmabschnitt mehrere elastisch einwärts verformbare Finger und einen radial einwärts der Finger angeordneten Dichtungsring umfasst. Durch die Ausbildung von mehreren Fingern, die sich vorzugsweise in axialer Richtung oder zumindest mit einer axialen Richtungskomponente erstrecken und die elastisch radial einwärts verformbar sind, kann eine wirksame Klemmung einer Kabelleitung, die durch die Kabeldurchführung verläuft, erzielt werden. Insbesondere kann durch eine solche Ausgestaltung, wenn die Finger mit einem umfänglichen Abstand zueinander angeordnet sind, ein breiter Klemmbereich erzielt werden, mit dem Kabelleitungen aus einem Durchmesserbereich geklemmt und wirksam abgedichtet werden können. Dabei ist zu verstehen, dass insbesondere die Ausbildung des Klemmabschnitt mit solchen radial einwärts verformbaren Fingern mit einer gummielastischen Dichtungshülse kombiniert werden kann, die radial einwärts von den Fingern in der Kabeldurchführung angeordnet ist und durch die Verformung der Finger nach radial einwärts an die Kabelleitung gepresst wird. Dabei wird eine besonders gute Zusammenwirkung erzielt, wenn die Finger aus einem Hartplastik ausgebildet sind und das Dichtungselement demgegenüber aus einem Material mit einer höheren Elastizität ausgebildet ist.

Gemäß einer noch weiteren bevorzugten Ausführungsform ist vorgesehen, dass die Kabeldurchführungshülse ein erstes axiales Ende aufweist, das an dem Achselement befestigt ist und ein zweites, dem ersten axialen Ende gegenüberliegendes axiales Ende aufweist, an dem die Klemmhülse befestigt ist, und dass ein Dichtungselement die Klemmhülse in der Betriebsposition gegen das Achselement abdichtet. Bei dieser Ausführungsform ist die Kabeldurchführungshülse mit einem Ende an dem Achselement befestigt und die Klemmhülse ist an einem hierzu gegenüberliegenden Ende an der Kabeldurchführungshülse befestigt. Dabei ist vorgesehen, dass die Klemmhülse ein Dichtungselement aufweist, welches unmittelbar eine Dichtungswirkung zwischen Klemmhülse und Achselement bewirkt, wenn die Klemmhülse in der zweiten Position, also in Betriebsposition ist. Hierdurch wird eine direkte Abdichtung zwischen Klemmhülse und Achselement bewirkt, sodass ein Eindringen von Feuchtigkeit in den Bereich zwischen Klemmhülse und Kabeldurchführungshülse wirksam verhindert wird und eine separate Abdichtung der Klemmhülse zur Kabeldurchführungshülse einerseits und der Kabeldurchführungshülse zum Achselement andererseits entfallen kann. Es ist zu verstehen, dass diese Ausgestaltung besonders wirksam ist, wenn der Klemmabschnitt ebenfalls an dem axialen Ende ausgebildet ist, an dem die Klemmhülse befestigt ist, sodass von diesem Ende sowohl die Abdichtung zwischen Klemmhülse und Achselement als auch die Abdichtung zwischen Kabeldurchführung und Leitungskabel bewirkt wird.

Dabei ist zu verstehen, dass die Klemmhülse zwar von diesem Ende aus montiert wird, die Dichtungsebene aber nicht notwendigerweise an dem axialen Ende liegen muss, sondern auch durch den Montagevorgang einwärts in Richtung desjenigen Endes versetzt sein kann, an dem die Kabeldurchführungshülse mit dem Achselement verbunden ist.

Noch weiter ist es dabei bevorzugt, wenn das Dichtungselement axial zwischen der Klemmhülse und dem Achselement gepresst ist, wenn die Klemmhülse relativ zu der Kabeldurchführungshülse der zweiten Position ist. Gemäß dieser Ausführungsform wird eine axiale Pressung des Dichtungselements und damit eine wirksame Abdichtung bewirkt, indem die Klemmhülse in die zweite Position bewegt wird. Diese Bewegung der Klemmhülse kann beispielsweise durch eine axiale, translatorische Schiebebewegung zum Erreichen einer Rastwirkung ausgeführt werden, durch eine kombinierte translatorische und rotatorische Bewegung zwischen Klemmhülse und Kabeldurchführungshülse um eine Bajonett-artige Befestigung zu bewirken oder mittels eine Verschraubung der Klemmhülse an der Kabeldurchführungshülse.

Gemäß einer noch weiteren bevorzugten Ausführungsform ist vorgesehen, dass der Befestigungsabschnitt abgedichtet an dem Achselement befestigt ist. Gemäß dieser Ausführungsform ist eine gesonderte Abdichtung des Befestigungsabschnitt vorgesehen, die ein Eindringen von Feuchtigkeit durch diesen Befestigungsbereich zuverlässig verhindert. Diese Befestigung kann beispielsweise mittels eines gummielastischen Dichtungsrings wie eines O-Ringes bewirkt werden oder kann durch eine Verschraubung der Kabeldurchführungshülse am Achselement mit einer in dem Gewinde angeordneten dauerelastischen oder aushärtenden Dichtungsmasse bewirkt werden.

Schließlich ist gemäß einer weiteren bevorzugten Ausführungsform vorgesehen, dass die Steckerverbindung mehrpolig ist und der Stecker oder die Buchse eine Mehrzahl von Kontakten aufweist, die in axial vorstehenden Kontaktvorsprüngen angeordnet sind, die mit Kontakten an der Buchse bzw. dem Stecker, die in entsprechenden Kontaktvertiefungen angeordnet sind, in elektrischen Kontakt gebracht sind, wobei einer der Mehrzahl von Kontakten an einem Kontaktvorsprung ausgebildet ist, der von den anderen Kontaktvorsprüngen verschieden ist, insbesondere einen unterschiedlichen axialen Querschnitt und/oder eine unterschiedliche axiale Länge gegenüber dem anderen Kontaktvorsprüngen aufweist, und mit einer entsprechend passenden, von den anderen verschiedenen Kontaktvertiefungen zusammenwirkt, wobei vorzugsweise an dem verschiedenen Kontakt elektrisch Masse anliegt. Mit dieser Ausführungsform wird eine in Bezug auf eine Rotation um die Längsachse eindeutige Zuordnung der Verbindung zwischen Stecker und Buchse, also eine verpolungssichere Steckverbindung erzielt. Der unterschiedliche Kontakt kann dabei zum Beispiel von einem rechtwinkligen Kontaktvorsprung umgeben sein, wohingegen die anderen Kontakte von im Querschnitt runden Kontaktvorsprüngen umgeben sind. Der Kontaktvorsprung kann insbesondere zusätzlich eine elektrische Isolatorwirkung erfüllen.

Ein weiterer Aspekt der Erfindung ist eine elektrische Steckverbindung zur Anordnung in einem Hohlraum eines Achselementes einer motorbetriebenen Förderrolle nach Anspruch 15.

Diese elektrische Steckverbindung eignet sich insbesondere dazu, um an motorbetriebenen Förderrollen eingesetzt zu werden und hierbei eine einerseits zuverlässige elektrische Verbindung, andererseits zuverlässige Abdichtung gegen Eindringen von Spritzwasser und Feuchtigkeit bereit zu stellen. Grundsätzlich ist zu verstehen, dass die elektrische Steckverbindung gemäß dieses Aspekts der Erfindung fortgebildet werden kann gemäß den zuvor erläuterten Fortbildungen der elektrischen Steckverbindung und der Kabeldurchführung hierzu. Hierbei ist zu verstehen, dass die entsprechenden Fortbildungen in Bezug auf die elektrischen Steckverbindung die gleichen Funktionalitäten, Varianten und Vorteile aufweisen, wie dies zuvor in Bezug auf die motorbetriebene Förderrolle beschrieben wurde.

Eine bevorzugte Ausführungsform wird anhand der beiliegenden Figuren beschrieben. Es zeigen:
- Figur 1: eine längst geschnittene Seitenansicht eines Achselementes mit einer elektrischen Steckverbindung gemäß einer erfindungsgemäßen bevorzugten Ausführungsform,

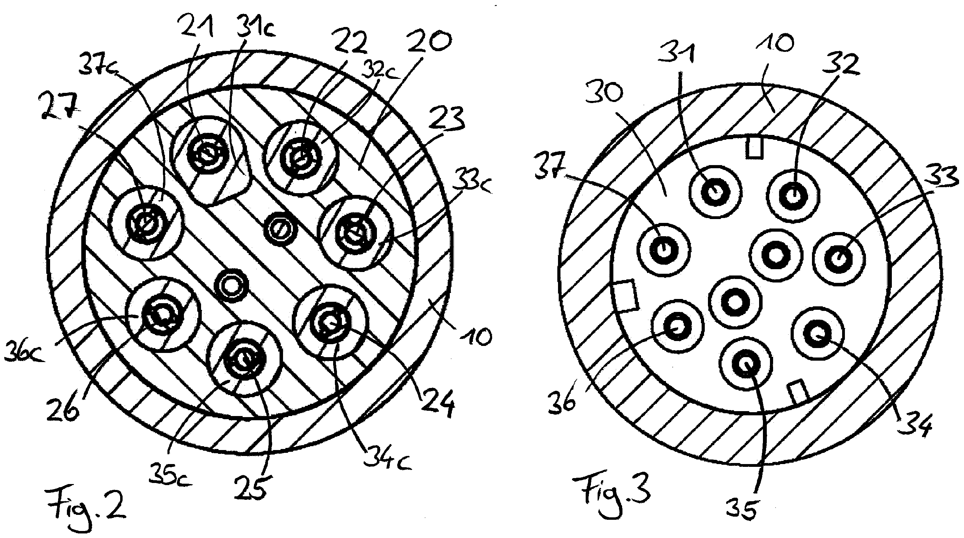

- Figur 2: einen Querschnitt entlang der Linie G-G in Figur 1,
- Figur 3: einen Querschnitt entlang der Linie H-H in Figur 1, und
- Figur 4: eine Ansicht einer motorbetriebenen Förderrolle mit einem daran am rechten Ende ausgebildeten Achselement gemäß Figur

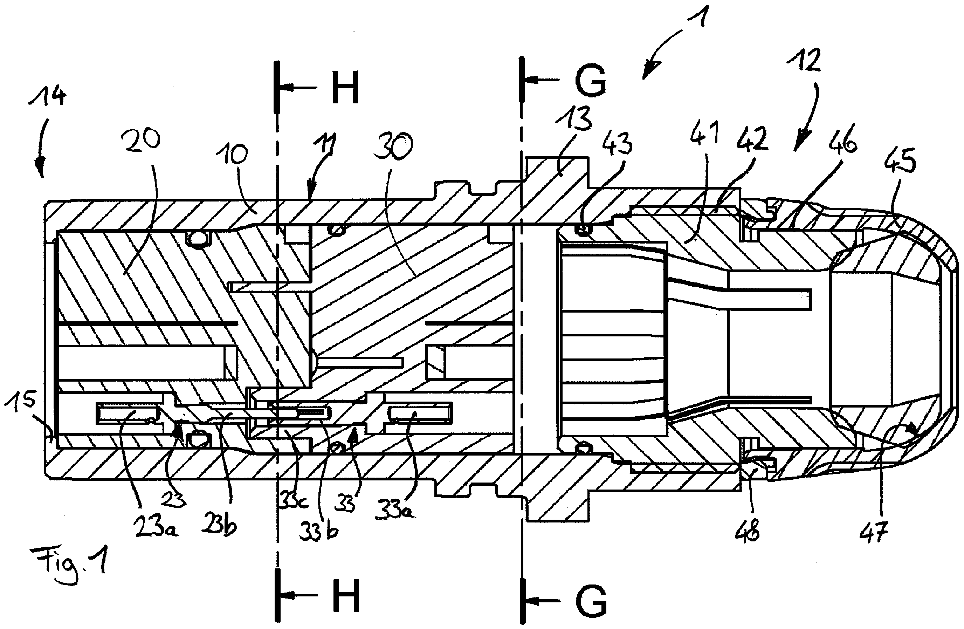

Figur 1 zeigt ein als Hohlachse ausgebildetes Achselement 10, welches eine zylindrische Außenumfangsfläche 11 aufweist, die benachbart zum rechten außenliegenden Ende 12 einen umlaufenden Kragen 13 aufweist, dessen Außendurchmesser größer ist als der Außendurchmesser der Umfangsfläche des Achselements in dem Bereich links und rechts des Kragens.

Das Achselement weist einen mehrfach gestuften, zylindrischen Innenraum auf der einen sich axial erstreckenden Durchgang bildet, in dem verschiedenen Bauteile angeordnet und befestigt sind. Am innenliegenden linken Ende 14 des Achselements ist ein nach innen ragender, umlaufender Absatz 15 angeordnet, der den geringsten Innendurchmesser des gesamten Durchgangs aufweist. Sämtliche Bauteile, die in dem Innenraum des Achselements angeordnet sind, werden daher im Zuge der Montage vom außenliegenden, rechten Ende 12 aus eingeführt und liegen aneinandergereiht in dem Innenraum vor.

Unmittelbar benachbart zum Absatz am innen liegenden Ende 14 ist ein elektrisches Steckerelement 20 angeordnet. Das elektrische Steckerelement umfasst insgesamt neun Stifte 21-27, die in über den Umfang verteilte Bohrungen in dem Steckerelement angeordnet sind. Jeder Stift weist an seinem zum innen liegenden Ende 14 weisenden Abschnitt einen Hülsenabschnitt 23a auf, der mit einem abisolierten Ende eines Kabels verbunden, beispielsweise gelötet oder verpresst werden kann für eine zuverlässige elektrische Verbindung. An seinem zum auswärts liegenden Ende 12 weisenden Abschnitt weist jeder Kontaktstift einen Stiftabschnitt 23b auf, der in elektrischer Bindung mit einer entsprechenden Kontakthülse 33 einer Buchse 30 gebracht werden kann. Das Steckerelement 20 ist mittels eines axial etwa mittig angeordneten, umlaufenden O-Rings 28 abgedichtet in dem Achselement 10 befestigt und wird durch eine reibschlüssige Verbindung an seinem Außenumfang in dem Achselement gehalten.

Die Buchse 30 weist ein mehrpoliges Muster von über den Umfang verteilten neun Kontaktbuchsen 31-37 auf, die der Anordnung der sieben Kontaktstifte 21-27 des Steckerelements 20 entsprechen. Jede der sieben Kontaktbuchsen weist an dem zum innen liegenden Ende 14 des Achselelement weisenden Abschnitt einen Kontakthülsenabschnitt 33b auf, der einen Innendurchmesser hat, der eine reibschlüssige und elektrisch zuverlässige Verbindung mit einem Stiftabschnitt 23b des Steckerlelements jeweils herstellen kann. Jeder Kontakthülseabschnitt ist an der zum innen liegenden Ende weisenden Stirnfläche des Buchsenelements 30 von einem Isolationsmantel 33c umgeben, der eine kurze Distanz über die Stirnfläche des Buchsenelements hinaussteht. Sechs der Kontakthülseabschnitte stehen gemeinsam mit ihrem Isolationsmantel 32c-37c eine übereinstimmende Distanz in axialer Richtung vor, wohingegen einer der Kontakthülseabschnitte einen Isolationsmantel 31c aufweist, der einen von den anderen Isolationsmänteln abweichenden axialen Querschnitt aufweist, indem er nicht zylindrisch, sonder nicht-kreisförmig mit einer außen verrundeten und innen rechteckigen Kontur ausgebildet ist. Dieser Isolationsmantel 31c und diese in diesem Isolationsmantel angeordnete Kontaktbuchse 31b passt ausschließlich in eine einzige entsprechend geformte Ausnehmung 21c in dem Steckerlelement 20 und kann daher nur mit einem entsprechenden Kontaktstift 21, der in dieser entsprechend ausgeformten Ausnehmung angeordnet ist, für eine elektrische Steckverbindung zusammengeführt werden. Der anders geformte Isolationsmantel 31c steht axial eine größere Distanz vor als die anderen sechs Isolationsmäntel 32c-37c. Durch diese Konfiguration ist es beim Zusammenfügen des Steckerelements 20 und des Buchsenelements 30 nur möglich, das Steckerelement und das Buchsenelement in einer einzigen Winkelausrichtung zueinander zu verbinden und diese Winkelausrichtung ist durch einen Monteur in einfacher Weise auffindbar aufgrund des weiteren axialen Vorstehens des spezifisch geformten Isolationsmantels 31c um die Kontakthülse 31.

Jede Kontakthülse hat an ihrem zum außen liegenden Ende 12 des Achselelements weisenden Ende wiederrum einen Hülsenabschnitt 33a, der zur Verpressung mit einem abisolierten Ende eines Kabels elektrisch zuverlässig verbunden werden kann.

Die neunadrige Kabelleitung, die von außen mit der Buchse 30 verbunden wird, läuft durch eine sich koaxial zu dem Achselement 10 erstreckende Kabeldurchführung 40. Die Kabeldurchführung 40 umfasst eine Kabeldurchführungshülse 41, die mittels eines Außengewindes 42 in ein entsprechendes Innengewinde am außen liegenden Ende 12 des Achselements eingeschraubt ist. Die Kabeldurchführungshülse ist mittels eines einwärts von diesem Außengewinde 42 liegenden Dichtungsrings 43 an der Innenumfangsfläche des Achselements gegenüber diesem abgedichtet, sodass keine Flüssigkeit zwischen der Kabeldurchführungshülse und dem Achselement hindurchtreten kann.

Die Kabeldurchführungshülse 41 erstreckt sich aus dem außenliegenden Ende 12 des Achselements 10 hinaus. Auf dem sich hinaus erstreckenden Abschnitt der Kabeldurchführungshülse ist eine Klemmhülse 45 befestigt. Die Befestigung der Klemmhülse 45 erfolgt mittels einer Verschraubung 46. Hierzu weist die Klemmhülse 45 ein Innengewinde auf, das mit einem Außengewinde der Kabeldurchführungshülse zusammenwirkt. Um zu verhindern, dass sich in Spalten oder Kapillaren zwischen der Klemmhülse 45 und dem außen liegenden Ende der Kabeldurchführungshülse Bakterien ansammeln, befindet sich zusätzlich zu dem Dichtungsring 43 eine Ringdichtung 48 am axialen, zum Achselement weisenden Ende der Klemmhülse.

Durch Aufschrauben der Klemmhülse 45 auf die Kabeldurchführungshülse 41 wird ein nach radial einwärts verrundeter, sich verjüngender Abschnitt 47 in Zusammenwirkung mit dem nach außen vorstehenden Abschnitt der Kabeldurchführungshülse gebracht. Der nach außen vorstehende Abschnitt der Kabeldurchführungshülse wird hierdurch nach radial einwärts verformt und klemmt die Kabelleitung, die in diesem Bereich verläuft. Diese Klemmwirkung kann durch eine Dichtungswirkung ergänzt werden, indem radial einwärts von dem sich verformenden Abschnitt der Kabeldurchführungshülse ein Schlauchabschnitt aus einem gummielastischen Material angeordnet wird, der sich dichtend an die Innenumfangsfläche der Kabeldurchführungshülse in diesen sich radial einwärts verformenden Bereich und ebenso dicht sind an die Außenumfangsfläche der Kabelleitung in diesem Bereich anlegt, wenn die radiale Einwärtsverformung erfolgt. Hierdurch wird eine zuverlässige Klemmung und Abdichtung der Kabelleitung in der Kabeldurchführung erzielt. Es ist zu verstehen, dass die Klemm- und Dichtungswirkung der Kabeldurchführung beispielsweise gemäß der Ausgestaltung erzielt werden kann, die in DE102008018205B4, DE202008017534U1, EP1675244B1 oder EP2369211A2 beschrieben ist.

Die Klemmhülse 45 weist an ihrem zum Achselement weisenden axialen Stirnseitigen Ende eine umlaufende Ringdichtung 48 auf, die bei Aufschrauben der Klemmhülse 45 auf der Kabeldurchführungshülse 41 axial an die Stirnseite des Achselement am außen liegenden Ende 12 angepresst wird. Hierdurch wird eine weitere Abdichtung zwischen der Klemmhülse 45 einerseits und dem Achselement 10 andererseits unmittelbar bewirkt und die Widerstandsfähigkeit gegen Spritzwasser weiter erhöht.

Der zylindrische Innenraum des Achselementes besteht aus vier axial beabstandeten, verschiedenen zylindrischen Bereichen, die durch kurze Übergangsschrägen (Fasen) in einander übergehen. Die Durchmesser dieser zylindrischen Bereiche nehmen vom äußeren Ende 12 in axialer Richtung nach innen ab. Der Dichtungsring 43 dichtet auf einem größeren Durchmesser als die Dichtung des Buchsenelementes 30 und diese wiederum auf einem größeren Durchmesser als die Dichtung 28 ab. Hierdurch werden die Bewegungen der einzelnen Dichtringe im verpressten Zustand, im Zuge der Montage der Buchsenteile möglichst niedrig gehalten und ein sicheres Fügen der tief in der Hohlachse liegenden elektrischen Kontakte ermöglicht.

Im der erweiterten zylindrischen Ausnehmung der Kabeldurchführungshülse 41 kann ein zusätzliches EMV Element montiert werden, dass einen elektrischen Kontakt zwischen der Kabeldurchführungshülse 41 und einer zusätzlichen Abschirmung des Kabels bewirkt, um eine elektromagnetische Abschirmung zu erzielen, wie beispielsweise in DE102008018205B4 beschrieben.

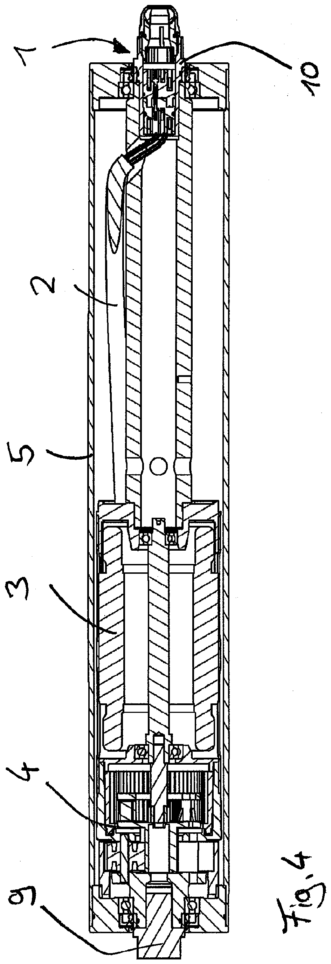

Figur 4 zeigt eine Gesamtansicht einer erfindungsgemäßen Motorrolle in einer Längsschnittdarstellung. Die Motorrolle umfasst einen elektrischen Motor 3, der mit einem Planetengetriebe 4 verbunden ist. Planetengetriebe 4 und Motor 3 sind innerhalb eines Rollenkörpers 5 angeordnet. Aus dem Rollenkörper ragen endseitig ein linkes Achselement 9 und ein rechtes Achselement 10 heraus. Gegenüber den Achselementen 9, 10 ist der Rollenkörper drehbar gelagert und der Motor 3 mit Getriebe 4 erzeugt ein Antriebsdrehmoment zwischen den Achselementen 9, 10 einerseits und dem Rollenkörper 5 andererseits.

Die elektrische Stromversorgung und Ansteuerung des Motors 3 erfolgt mittels einer elektrischen Leitung 2. Die elektrische Leitung 2 ist mit einer elektrischen Steckverbindung mit Kabeldurchführung 1 verbunden, die im rechten Achselement angeordnet und daran befestigt ist. Die elektrische Leitung 2 läuft aus einem koaxial zur Drehachse verlaufenden Anschluss an die elektrische Steckverbindung innerhalb des Achselements 10 durch eine radiale Öffnung in einer Achse in eine radial auswärts angeordnete exzentrische Lage innerhalb des Rollenkörpers 5 und ist exzentrisch an den Motor 3 angeschlossen.

## Patentansprüche

1. Motorgetriebene Förderrolle, umfassend:
- einen Rollenkörper (5), der sich entlang einer Längsachse erstreckt,
- ein Achselement (10),
- eine Lagereinheit zur drehbaren Lagerung des Rollenkörpers in Bezug auf das Achselement,
- einen innerhalb des Rollenkörpers angeordneten Antriebsmotor (3), der mit dem Achselement und dem Rollenkörper zur Erzeugung eines Drehmoments zwischen dem Achselement und dem Rollenkörper mechanisch gekoppelt ist,
- eine elektrische Steckverbindung, die in einem Hohlraum in dem Achselement angeordnet ist und die einen Stecker (20) und eine Buchse (30) umfasst, die lösbar miteinander gekoppelt werden können, um eine ein- bis mehrpolige elektrische Steckverbindung herzustellen
- eine elektrische Verbindungsleitung (2) zwischen der elektrischen Steckverbindung und dem Antriebsmotor,
- eine Kabeldurchführung (1), umfassend
- einen Befestigungsabschnitt, der an einem Ende (12) des Achselementes abgedichtet an dem Achselement befestigt ist, **dadurch gekennzeichnet, dass** die Kabeldurchführung umfassend
- einen Klemmabschnitt der
∘ elastisch nach radial auswärts in eine Montageposition vorgespannt ist und in der Montageposition einen Innendurchmesser umschreibt, der größer als ein vorbestimmter Nenndurchmesser des Leitungskabels ist, und
∘ in eine Betriebsposition elastisch nach radial einwärts verformbar ist, und in der Betriebsposition einen Innendurchmesser umschreibt, der kleiner oder gleich dem vorbestimmten Leitungsdurchmesser des Leitungskabels ist,
- eine Kabeldurchführungshülse (41) mit einem Innenraum zur Durchführung des Leitungskabels, und
- eine an der Kabeldurchführungshülse lösbar befestigte Klemmhülse (45), die
∘ zwischen einer ersten Position in Bezug auf die Kabeldurchführungshülse und einer zweiten Position in Bezug auf die Kabeldurchführungshülse bewegbar ist,
∘ wobei in der ersten Position die Klemmhülse und die Kabeldurchführungshülse so zusammenwirken, dass der Klemmabschnitt in der Montageposition ist und das in dem Innenraum der Kabeldurchführungshülse verlaufende Leitungskabel relativ zu der Kabeldurchführungshülse beweglich ist, und
∘ wobei in der zweiten Position die Klemmhülse und die Kabeldurchführungshülse so zusammenwirken, dass der Klemmabschnitt in der Betriebsposition ist und eine Klemmwirkung auf das in dem Innenraum der Kabeldurchführungshülse verlaufende Leitungskabel ausgeübt wird, durch die das Leitungskabel in der Kabeldurchführungshülse gegen eine Relativbewegung zu der Kabeldurchführungshülse fixiert ist.

2. Motorgetriebene Förderrolle nach Anspruch 1,
**dadurch gekennzeichnet, dass** der Klemmabschnitt einen Dichtungsabschnitt umfasst, der das Leitungskabel in der Betriebsposition abgedichtet in dem Klemmabschnitt fixiert.

3. Motorgetriebene Förderrolle nach Anspruch 1 oder 2,
**dadurch gekennzeichnet, dass** der Befestigungsabschnitt an der Kabeldurchführungshülse (41) ausgebildet ist.

4. Motorgetriebene Förderrolle nach einem der vorhergehenden Ansprüche,
**dadurch gekennzeichnet, dass** der Klemmabschnitt an der Kabeldurchführungshülse (41) ausgebildet ist.

5. Motorgetriebene Förderrolle nach einem der vorhergehenden Ansprüche, **dadurch gekennzeichnet, dass** das Achselement
- einen ersten Achsabschnitt, der von dem Rollenkörper oder einer an dem Rollenkörper befestigten Endkappe umgeben ist und
- einen zweiten Achsabschnitt, der aus dem Rollenkörper bzw. der Endkappe hervorsteht zur Befestigung des Achselements an einem Förderrollengestell, aufweist, wobei die Lagereinheit an dem ersten Achsabschnitt befestigt ist und der Befestigungsabschnitt der Kabeldurchführung an dem zweiten Achsabschnitt befestigt ist.

6. Motorgetriebene Förderrolle nach einem der vorhergehenden Ansprüche,
**dadurch gekennzeichnet, dass** die Klemmhülse (45) mit der Kabeldurchführungshülse (41) mittels einer lösbaren Rastverbindung verbunden ist und aus der zweiten in die erste Position bewegbar ist, indem die Klemmhülse mit der Kabeldurchführungshülse verrastet wird.

7. Motorgetriebene Förderrolle nach einem der vorhergehenden Ansprüche 1-5,
**dadurch gekennzeichnet, dass** die Klemmhülse (45) mit der Kabeldurchführungshülse (41) mittels einer Gewindeverbindung verbunden ist und aus der zweiten in die erste Position bewegbar ist, indem die Klemmhülse auf die Kabeldurchführungshülse aufgeschraubt oder in die Kabeldurchführungshülse eingeschraubt wird.

8. Motorgetriebene Förderrolle nach einem der vorhergehenden Ansprüche,
**dadurch gekennzeichnet, dass** der Klemmabschnitt eine sich verjüngende Umfangsfläche, eine Gegenumfangsfläche und ein elastisch verformbares Dichtungselement umfasst, das durch eine axiale Bewegung der Klemmhülse relativ zu der Kabeldurchführungshülse aus der ersten in die zweite Position radial einwärts verformt wird, indem die sich verjüngende Umfangsfläche gegen die Gegenumfangsfläche gepresst wird.

9. Motorgetriebene Förderrolle nach dem vorhergehenden Anspruch, **dadurch gekennzeichnet, dass**
- die sich verjüngende Umfangsfläche als Innenumfangsfläche an der Klemmhülse (45) oder an der Kabeldurchführungshülse (41) ausgebildet ist und die Gegenumfangsfläche entsprechend als Außenumfangsfläche an der Kabeldurchführungshülse oder an der Klemmhülse ausgebildet ist, oder
- die sich verjüngende Umfangsfläche als Außenumfangsfläche an der Klemmhülse (45) oder an der Kabeldurchführungshülse (41) ausgebildet ist und die Gegenumfangsfläche entsprechend als Innenumfangsfläche an der Kabeldurchführungshülse oder an der Klemmhülse ausgebildet ist.

10. Motorgetriebene Förderrolle nach einem der vorhergehenden Ansprüche,
**dadurch gekennzeichnet, dass** der Klemmabschnitt mehrere elastisch einwärts verformbare Finger und einen radial einwärts der Finger angeordneten Dichtungsring umfasst.

11. Motorgetriebene Förderrolle nach einem der vorhergehenden Ansprüche,
**dadurch gekennzeichnet, dass** die Kabeldurchführungshülse (41) ein erstes axiales Ende aufweist, das an dem Achselement befestigt ist und ein zweites, dem ersten axialen Ende gegenüberliegendes axiales Ende aufweist, an dem die Klemmhülse befestigt ist, und dass ein Dichtungselement (48) die Klemmhülse in der Betriebsposition gegen das Achselement abdichtet.

12. Motorgetriebene Förderrolle nach dem vorhergehenden Anspruch 11,
**dadurch gekennzeichnet, dass** das Dichtungselement axial zwischen der Klemmhülse und dem Achselement gepresst ist, wenn die Klemmhülse relativ zu der Kabeldurchführungshülse der zweiten Position ist.

13. Motorgetriebene Förderrolle nach einem der vorhergehenden Ansprüche,
**dadurch gekennzeichnet, dass** der Befestigungsabschnitt abgedichtet an dem Achselement befestigt ist,

14. Motorgetriebene Förderrolle nach einem der vorhergehenden Ansprüche,
**dadurch gekennzeichnet, dass** die Steckerverbindung mehrpolig ist und der Stecker (20) oder die Buchse (30) eine Mehrzahl von Kontakten aufweist, die in axial vorstehenden Kontaktvorsprüngen angeordnet sind, die mit Kontakten an der Buchse bzw. dem Stecker, die in entsprechenden Kontaktvertiefungen angeordnet sind, in elektrischen Kontakt gebracht sind, wobei einer der Mehrzahl von Kontakten an einem Kontaktvorsprung ausgebildet ist, der von den anderen Kontaktvorsprüngen verschieden ist, insbesondere einen unterschiedlichen axialen Querschnitt und/oder eine unterschiedliche axiale Länge gegenüber dem anderen Kontaktvorsprüngen aufweist, und mit einer entsprechend passenden, von den anderen verschiedenen Kontaktvertiefungen zusammenwirkt, wobei vorzugsweise an dem verschiedenen Kontakt elektrisch Masse anliegt.

15. Elektrische Steckverbindung zur Anordnung in einem Hohlraum eines Achselementes (10) einer motorbetriebenen Förderrolle, umfassend
- einen Stecker (20) und eine Buchse (30), die lösbar miteinander gekoppelt werden können, um eine ein- bis mehrpolige elektrische Steckverbindung herzustellen
- eine Kabeldurchführung (1), umfassend
- einen Befestigungsabschnitt, der an einem Ende des Achselementes an dem Achselement befestigt ist, **dadurch gekennzeichnet, dass** die Kabeldurchführung umfassend
- einen Klemmabschnitt der
∘ elastisch nach radial auswärts in eine Montageposition vorgespannt ist und in der Montageposition einen Innendurchmesser umschreibt, der größer als ein vorbestimmter Nenndurchmesser des Leitungskabels ist, und
∘ in eine Betriebsposition elastisch nach radial einwärts verformbar ist, der kleiner oder gleich dem vorbestimmten Leitungsdurchmesser des Leitungskabels ist.
- eine Kabeldurchführungshülse (41) mit einem Innenraum zur Durchführung des Leitungskabels, und
- eine an der Kabeldurchführungshülse lösbar befestigte Klemmhülse (45), die
∘ zwischen einer ersten Position in Bezug auf die Kabeldurchführungshülse und einer zweiten Position in Bezug auf die Kabeldurchführungshülse bewegbar ist,
∘ wobei in der ersten Position die Klemmhülse und die Kabeldurchführungshülse so zusammenwirken, dass der Klemmabschnitt in der Montageposition ist und das in dem Innenraum der Kabeldurchführungshülse verlaufende Leitungskabel relativ zu der Kabeldurchführungshülse beweglich ist, und
∘ wobei in der zweiten Position die Klemmhülse und die Kabeldurchführungshülse so zusammenwirken, dass der Klemmabschnitt in der Betriebsposition ist und eine Klemmwirkung auf das in dem Innenraum der Kabeldurchführungshülse verlaufende Leitungskabel ausgeübt wird, durch die das Leitungskabel in der Kabeldurchführungshülse gegen eine Relativbewegung zu der Kabeldurchführungshülse fixiert ist.

16. Elektrische Steckverbindung nach Anspruch 15,
**dadurch gekennzeichnet, dass** die Kabeldurchführung fortgebildet ist gemäß den Merkmalen der Kabeldurchführung der motorbetriebenen Förderrolle nach einem der vorhergehenden Ansprüche 2-14.

## Claims

1. A motor-driven conveying roller, comprising:
- a roller body (5) which extends along a longitudinal axis,
- an axle element (10),
- a bearing unit for rotatably mounting the roller body in relation to the axle element,
- a drive motor (3) which is arranged within the roller body and is mechanically coupled to the axle element and to the roller body for generating a torque between the axle element and the roller body,
- an electrical plug-in connection which is arranged in a cavity in the axle element and which comprises a plug (20) and a socket (30), which can be coupled to one another in a releasable manner, in order to establish a single- to multiple-pole electrical plug-in connection,
- an electrical connecting line between the electrical plug-in connection and the drive motor,
a cable bushing (1), comprising
- a fastening section which is fastened to the axle element in a sealed-off manner at one end (12) of the axle element,
**characterized in that** the cable bushing further comprises
- a clamping section which
∘ is prestressed elastically radially outward into a mounting position and, in the mounting position, describes an inside diameter which is larger than a predetermined nominal diameter of the line cable, and
∘ can be deformed elastically radially inward into an operating position and, in the operating position, describes an inside diameter which is smaller than or equal to the predetermined line diameter of the line cable,
- a cable bushing sleeve with an interior space for the line cable to pass through, and
- a clamping sleeve which is fastened in a releasable manner to the cable bushing sleeve and which
∘ can be moved between a first position in relation to the cable bushing sleeve and a second position in relation to the cable bushing sleeve,
∘ wherein, in the first position, the clamping sleeve and the cable bushing sleeve interact such that the clamping section is in the mounting position and the line cable which runs in the interior space in the cable bushing sleeve can move relative to the cable bushing sleeve, and
∘ wherein, in the second position, the clamping sleeve and the cable bushing sleeve interact such that the clamping section is in the operating position and a clamping effect is exerted on the line cable which runs in the interior space in the cable bushing sleeve, the line cable in the cable bushing sleeve being fixed against relative movement in relation to the cable bushing sleeve by said clamping effect.

2. The motor-driven conveying roller as claimed in claim 1,
**characterized in that** the clamping section comprises a sealing section which fixes the line cable in the clamping section in a sealed-off manner in the operating position.

3. The motor-driven conveying roller as claimed in claim 1 or 2,
**characterized in that** the fastening section is formed on the cable bushing sleeve.

4. The motor-driven conveying roller as claimed in one of the preceding claims,
**characterized in that** the clamping section is formed on the cable bushing sleeve.

5. The motor-driven conveying roller as claimed in one of the preceding claims, **characterized in that** the axle element has
- a first axle section which is surrounded by the roller body or an end cap which is fastened to the roller body and
- a second axle section which projects out of the roller body or the end cap for fastening the axle element to a conveying roller frame,
wherein the bearing unit is fastened to the first axle section and the fastening section of the cable bushing is fastened to the second axle section.

6. The motor-driven conveying roller as claimed in one of the preceding claims,
**characterized in that** the clamping sleeve is connected to the cable bushing sleeve by means of a releasable latching connection and can be moved out of the second position into the first position by way of the clamping sleeve being latched to the cable bushing sleeve.

7. The motor-driven conveying roller as claimed in one of preceding claims 1-5,
**characterized in that** the clamping sleeve is connected to the cable bushing sleeve by means of a threaded connection and can be moved out of the second position into the first position by way of the clamping sleeve being screwed onto the cable bushing sleeve or being screwed into the cable bushing sleeve.

8. The motor-driven conveying roller as claimed in one of the preceding claims,
**characterized in that** the clamping section comprises a tapering circumferential surface, an opposing circumferential surface and an elastically deformable sealing element which is deformed radially inward by an axial movement of the clamping sleeve relative to the cable bushing sleeve from the first position into the second position by way of the tapering circumferential surface being pressed against the opposing circumferential surface.

9. The motor-driven conveying roller as claimed in the preceding claim,
**characterized in that**
- the tapering circumferential surface is formed, as inner circumferential surface, on the clamping sleeve or on the cable bushing sleeve and the opposing circumferential surface is accordingly formed, as outer circumferential surface, on the cable bushing sleeve or on the clamping sleeve, or
- the tapering circumferential surface is formed, as outer circumferential surface, on the clamping sleeve or on the cable bushing sleeve and the opposing circumferential surface is accordingly formed, as inner circumferential surface, on the cable bushing sleeve or on the clamping sleeve.

10. The motor-driven conveying roller as claimed in one of the preceding claims,
**characterized in that** the clamping section comprises a plurality of elastically inwardly deformable fingers and a sealing ring which is arranged radially inward with respect to the fingers.

11. The motor-driven conveying roller as claimed in one of the preceding claims,
**characterized in that** the cable bushing sleeve has a first axial end which is fastened to the axle element and a second axial end which is situated opposite the first axial end and to which the clamping sleeve is fastened, and **in that** a sealing element seals off the clamping sleeve from the axle element in the operating position.

12. The motor-driven conveying roller as claimed in preceding claim 11,
**characterized in that** the sealing element is pressed axially between the clamping sleeve and the axle element when the clamping sleeve is the second position relative to the cable bushing sleeve.

13. The motor-driven conveying roller as claimed in one of the preceding claims,
**characterized in that** the fastening section is fastened to the axle element in a sealed-off manner,

14. The motor-driven conveying roller as claimed in one of the preceding claims,
**characterized in that** the plug connection has multiple poles and the plug or the socket has a plurality of contacts which are arranged in axially projecting contact protrusions which are brought into electrical contact with contacts on the socket or the plug, which contacts are arranged in corresponding contact recesses, wherein one of the plurality of contacts is formed on a contact protrusion which is different from the other contact protrusions, in particular has a different axial cross section and/or a different axial length in relation to the other contact protrusions, and interacts with a correspondingly matching contact recesses which are different from the others, wherein electrical ground is preferably applied to the different contact.

15. An electrical plug-in connection for being arranged in a cavity in an axle element of a motor-operated conveying roller, comprising
- a plug and a socket, which can be coupled to one another in a releasable manner, in order to establish a single- to multiple-pole electrical plug-in connection
a cable bushing, comprising
- a fastening section which is fastened to the axle element at one end of the axle element,
**characterized in that** the cable bushing comprises
- a clamping section which
∘ is prestressed elastically radially outward into a mounting position and, in the mounting position, describes an inside diameter which is larger than a predetermined nominal diameter of the line cable, and
∘ can be deformed elastically radially inward into an operating position which is smaller than or equal to the predetermined line diameter of the line cable,
- a cable bushing sleeve with an interior space for the line cable to pass through, and
- a clamping sleeve which is fastened in a releasable manner to the cable bushing sleeve and which
∘ can be moved between a first position in relation to the cable bushing sleeve and a second position in relation to the cable bushing sleeve,
∘ wherein, in the first position, the clamping sleeve and the cable bushing sleeve interact such that the clamping section is in the mounting position and the line cable which runs in the interior space in the cable bushing sleeve can move relative to the cable bushing sleeve, and
∘ wherein, in the second position, the clamping sleeve and the cable bushing sleeve interact such that the clamping section is in the operating position and a clamping effect is exerted on the line cable which runs in the interior space in the cable bushing sleeve, the line cable in the cable bushing sleeve being fixed against relative movement in relation to the cable bushing sleeve by said clamping effect.

16. The electrical plug-in connection as claimed in claim 15,
**characterized in that** the cable bushing is developed according to the features of the cable bushing of the motor-operated conveying roller as claimed in one of preceding claims 2-14.

## Revendications

1. Rouleau de transport motorisé comprenant :
- un corps de rouleau (5) qui s'étend le long d'un axe longitudinal,
- un élément d'axe (10),
- une unité de palier pour le logement rotatif du corps de rouleau par rapport à l'élément d'axe,
- un moteur d'entraînement (3) agencé à l'intérieur du corps de rouleau qui est couplé mécaniquement à l'élément d'axe et au corps de rouleau pour la génération d'un couple entre l'élément d'axe et le corps de rouleau,
- une liaison d'enfichage électrique qui est agencée dans un espace creux dans l'élément d'axe et qui comporte un connecteur (20) et une douille (30) qui peuvent être couplés entre eux de manière détachable afin d'établir une liaison d'enfichage électrique à un ou plusieurs pôles,
- un câble de liaison (2) électrique entre la liaison d'enfichage électrique et le moteur d'entraînement,
- un passage de câble (1) comprenant
- une section de fixation qui est fixée à une extrémité (12) de l'élément d'axe de manière étanche à l'élément d'axe, **caractérisé en ce que** le passage de câble comprend
- une section de serrage qui
- est précontrainte élastiquement radialement vers l'extérieur dans une position de montage et décrit dans la position de montage un diamètre intérieur qui est supérieur à un diamètre nominal prédéterminé du câble de conduite, et
- est déformable dans une position de fonctionnement élastiquement radialement vers l'intérieur, et décrit dans la position de fonctionnement un diamètre intérieur qui est inférieur ou égal au diamètre de conduite prédéterminé du câble de conduite,
- une douille de passage de câble (41) avec un espace intérieur pour le passage du câble de conduite, et
- une douille de serrage (45) fixée de manière détachable à la douille de passage de câble qui
- est mobile entre une première position par rapport à la douille de passage de câble et une seconde position par rapport à la douille de passage de câble,
- dans lequel dans la première position la douille de serrage et la douille de passage de câble coagissent de sorte que la section de serrage soit dans la position de montage et le câble de conduite s'étendant dans l'espace intérieur de la douille de passage de câble soit mobile par rapport à la douille de passage de câble, et
- dans lequel dans la seconde position la douille de serrage et la douille de passage de câble coagissent de sorte que la section de serrage soit dans la position de fonctionnement et une action de serrage soit exercée sur le câble de conduite s'étendant dans l'espace intérieur de la douille de passage de câble, par lequel le câble de conduite est fixé dans la douille de passage de câble contre un mouvement relatif vers la douille de passage de câble.

2. Rouleau de transport motorisé selon la revendication 1, **caractérisé en ce que** la section de serrage comporte une section de garniture qui fixe le câble de conduite dans la position de fonctionnement de manière étanche dans la section de serrage.

3. Rouleau de transport motorisé selon la revendication 1 ou 2, **caractérisé en ce que** la section de fixation est réalisée au niveau de la douille de passage de câble (41).

4. Rouleau de transport motorisé selon l'une des revendications précédentes, **caractérisé en ce que** la section de serrage est réalisée au niveau de la douille de passage de câble (41).

5. Rouleau de transport motorisé selon l'une des revendications précédentes, **caractérisé en ce que** l'élément d'axe présente
- une première section d'axe qui est entourée par le corps de rouleau ou un clapet d'extrémité fixé au corps de rouleau et
- une seconde section d'axe qui dépasse du corps de rouleau ou du clapet d'extrémité pour la fixation de l'élément d'axe à un bâti de rouleau de transport, dans lequel l'unité de palier est fixée à la première section d'axe et la section de fixation du passage de câble est fixée à la seconde section d'axe.

6. Rouleau de transport motorisé selon l'une des revendications précédentes, **caractérisé en ce que** la douille de serrage (45) est reliée à la douille de passage de câble (41) au moyen d'une liaison d'encliquetage amovible et est mobile de la seconde à la première position **en ce que** la douille de serrage est encliquetée à la douille de passage de câble.

7. Rouleau de transport motorisé selon l'une des revendications précédentes 1 à 5, **caractérisé en ce que** la douille de serrage (45) est reliée à la douille de passage de câble (41) au moyen d'une liaison filetée et est mobile de la seconde à la première position **en ce que** la douille de serrage est vissée sur la douille de passage de câble ou est vissée dans la douille de passage de câble.

8. Rouleau de transport motorisé selon l'une des revendications précédentes, **caractérisé en ce que** la section de serrage comporte une surface périphérique se rétrécissant, une surface périphérique antagoniste et un élément de garniture déformable élastiquement qui est déformé radialement vers l'intérieur par un mouvement axial de la douille de serrage par rapport à la douille de passage de câble de la première à la seconde position **en ce que** la surface périphérique se rétrécissant est pressée contre la surface périphérique antagoniste.

9. Rouleau de transport motorisé selon la revendication précédente, **caractérisé en ce que**
- la surface périphérique se rétrécissant est réalisée comme surface périphérique intérieure au niveau de la douille de serrage (45) ou au niveau de la douille de passage de câble (41) et la surface périphérique antagoniste est réalisée de manière correspondante comme surface périphérique extérieure au niveau de la douille de passage de câble ou au niveau de la douille de serrage, ou
- la surface périphérique se rétrécissant est réalisée comme surface périphérique extérieure au niveau de la douille de serrage (45) ou au niveau de la douille de passage de câble (41) et la surface périphérique antagoniste est réalisée de manière correspondante comme surface périphérique intérieure au niveau de la douille de passage de câble ou au niveau de la douille de serrage.

10. Rouleau de transport motorisé selon l'une des revendications précédentes, **caractérisé en ce que** la section de serrage comporte plusieurs doigts déformables élastiquement vers l'intérieur et comporte un anneau de garniture agencé radialement vers l'intérieur des doigts.

11. Rouleau de transport motorisé selon l'une des revendications précédentes, **caractérisé en ce que** la douille de passage de câble (41) présente une première extrémité axiale qui est fixée à l'élément d'axe et présente une seconde extrémité axiale opposée à la première extrémité axiale à laquelle la douille de serrage est fixée, et qu'un élément de garniture (48) rend étanche la douille de serrage dans la position de fonctionnement contre l'élément d'axe.

12. Rouleau de transport motorisé selon la revendication précédente 11, **caractérisé en ce que** l'élément de garniture est pressé axialement entre la douille de serrage et l'élément d'axe lorsque la douille de serrage par rapport à la douille de passage de câble est dans la seconde position.

13. Rouleau de transport motorisé selon l'une des revendications précédentes, **caractérisé en ce que** la section de fixation est fixée de manière étanche à l'élément d'axe.

14. Rouleau de transport motorisé selon l'une des revendications précédentes, **caractérisé en ce que** la liaison d'enfichage est à plusieurs pôles et le connecteur (20) ou la douille (30) présente une pluralité de contacts qui sont agencés dans des saillies de contact dépassant axialement qui sont amenées en contact électrique avec des contacts au niveau de la douille ou du connecteur qui sont agencés dans des cavités de contact correspondantes, dans lequel un de la pluralité de contacts est réalisé au niveau d'une saillie de contact qui est différente des autres saillies de contact, en particulier présente une section transversale axiale différente et/ou une longueur axiale différente par rapport aux autres saillies de contact, et coagit avec une cavité de contact adaptée de manière correspondante, différente des autres, dans lequel une masse est appliquée électriquement de préférence contre le contact différent.

15. Liaison d'enfichage électrique pour l'agencement dans un espace creux d'un élément d'axe (10) d'un rouleau de transport motorisé, comprenant
- un connecteur (20) et une douille (30) qui peuvent être couplés de manière détachable entre eux afin d'établir une liaison d'enfichage électrique à un ou plusieurs pôles,
- un passage de câble (1) comprenant
- une section de fixation qui est fixée à une extrémité de l'élément d'axe à l'élément d'axe, **caractérisée en ce que** le passage de câble comprend
- une section de serrage qui
- est précontrainte élastiquement radialement vers l'extérieur dans une position de montage et décrit dans la position de montage un diamètre intérieur qui est supérieur à un diamètre nominal prédéterminé du câble de conduite, et
- est déformable dans une position de fonctionnement élastiquement radialement vers l'intérieur, qui est inférieure ou égale au diamètre de conduite prédéterminé du câble de conduite,
- une douille de passage de câble (41) avec un espace intérieur pour le passage du câble de conduite, et
- une douille de serrage (45) fixée de manière détachable à la douille de passage de câble qui
- est mobile entre une première position par rapport à la douille de passage de câble et une seconde position par rapport à la douille de passage de câble,
- dans lequel dans la première position la douille de serrage et la douille de passage de câble coagissent de sorte que la section de serrage soit dans la position de montage et le câble de conduite s'étendant dans l'espace intérieur de la douille de passage de câble soit mobile par rapport à la douille de passage de câble, et
- dans lequel dans la seconde position la douille de serrage et la douille de passage de câble coagissent de sorte que la section de serrage soit dans la position de fonctionnement et une action de serrage soit exercée sur le câble de conduite s'étendant dans l'espace intérieur de la douille de passage de câble, par lequel le câble de conduite est fixé dans la douille de passage de câble contre un mouvement relatif vers la douille de passage de câble.

16. Liaison d'enfichage électrique selon la revendication 15,
**caractérisée en ce que** le passage de câble est perfectionné selon les caractéristiques du passage de câble du rouleau de transport motorisé selon l'une des revendications précédentes 2 à 14.
